# EUROPEAN PATENT APPLICATION

(11) **EP 4 129 802 A1**
(43) Date of publication of application: **08.02.2023**
(21) Application number: 20927921.5
(22) Date of filing: 25.12.2020
(51) Int. Cl.: B62D 1/04, B62D 1/06, B62D 1/08, B62D 1/10

(54) **STEERING WHEEL**

(30) Priority: 25.03.2020 CN 202010216502
(71) Applicant: Autoliv Development AB, 44783 Vargarda (SE)
(72) Inventor: WANG, Shuhao, Shanghai 201807 (CN); CHEN, Wenyuan, Shanghai 201807 (CN); SANG, Ruigang, Shanghai 201807 (CN)
(74) Representative: Schön, Thilo
(86) International application number: PCT/CN2020/139448
(87) International publication number: WO 2021/190016

(57) **Abstract**

Disclosed is a steering wheel (100, 100', 100"), including a steering wheel rim (110, 110', 110") and a steering wheel center portion (120, 120', 120"), the steering wheel rim (110, 110', 110") being movable relative to the steering wheel center portion (120, 120', 120"), and the steering wheel rim (110, 110', 110") being configured to be rotatable about a first axis of rotation (A1). The steering wheel center portion (120, 120', 120") is provided with a first track (1201, 1201') and a second track (1202). The steering wheel rim (110, 110', 110") includes a first protrusion (1101) and a second protrusion (1102) movable in the first track (1201, 1201') and the second track (1202) respectively. At least one of the first track (1201, 1201') and the second track (1202) includes a change section (1201A, 1201'A, 1201'B). An extension direction of at least one of the first track (1201, 1201') and the second track (1202) changes at the change section (1201A, 1201'A, 1201'B) such that, at the change section (1201A, 1201'A, 1201'B), movement of the first protrusion (1101) along the first track (1201, 1201'A) and/or movement of the second protrusion (1102) along the second track (1202) is transformed into rotation of the steering wheel rim (110, 110', 110") about a second axis of rotation. The second axis of rotation is perpendicular to the first axis of rotation (A1).

## Description

### TECHNICAL FIELD

The present invention relates to a steering mechanism of a vehicle, and relates in particular to a steering wheel.

### BACKGROUND

Motor vehicles are typically adjusted to a desired direction by means of front wheels thereof. A vehicle driver sets the desired direction by means of a steering wheel. To this end, a steering wheel rim is rotated such that the front wheels are directed towards the desired direction. The steering wheel rim is typically disposed in front of the chest of the vehicle driver so that the vehicle driver can grasp the steering wheel rim relatively easily. Meanwhile, the position of the steering wheel causes the driver to be limited in freedom of movement, and the driver cannot turn sideways in the seat or can only do so awkwardly. In addition, the driver is also adversely affected when getting into and out of the vehicle.

The degree of automation of vehicles today is increasingly higher so that the vehicles may move autonomously. Correspondingly, different levels of automation are distinguished for vehicles. Starting with level 3, which corresponds to highly automated driving, a driver does not need to monitor various systems for vehicle control. Thus, the driver may transfer their attention to matters of interest or have a rest. In this case, it is desirable that the steering wheel rim can be stored to provide greater space and higher comfort for the driver.

Accordingly, it is desirable to provide a storable steering wheel having a simple structure and low costs.

### SUMMARY

The objective of the present invention is to provide a storable steering wheel having a simple structure and low costs.

Provided in the present invention is a steering wheel, comprising a steering wheel rim and a steering wheel center portion, wherein the steering wheel rim is movable relative to the steering wheel center portion, and the steering wheel rim is configured to be rotatable about a first axis of rotation;
the steering wheel center portion is provided with a first track and a second track, and
the steering wheel rim comprises a first protrusion and a second protrusion movable in the first track and the second track respectively; and
at least one of the first track and the second track comprises a change section; and an extension direction of the at least one of the first track and the second track changes at the change section such that, at the change section, movement of the first protrusion along the first track and/or movement of the second protrusion along the second track is transformed into rotation of the steering wheel rim about a second axis of rotation, the second axis of rotation being perpendicular to the first axis of rotation.

According to an embodiment of the present invention, the distance between the first track and the second track changes at the change section.

According to an embodiment of the present invention, one of the first track and the second track is configured to be a linear track, and the other is configured to have a linear track section and the change section.

According to an embodiment of the present invention, the first protrusion and the second protrusion are disposed on a spoke connected between the steering wheel rim and the steering wheel center portion.

According to an embodiment of the present invention, the steering wheel further comprises a steering column housing in connection with an axial end of the steering wheel center portion, and the first track and the second track extend to the steering column housing.

According to an embodiment of the present invention, the change section is disposed at at least one end of the first track or the second track.

According to an embodiment of the present invention, the steering wheel rim comprises a missing portion, and the missing portion is adjacent to the steering wheel center portion or the steering column housing when the steering wheel rim rotates about the second axis of rotation.

According to an embodiment of the present invention, both the axis of the steering wheel center portion and the axis of the steering column housing coincide with the first axis of rotation.

According to an embodiment of the present invention, the change section is configured to be a circular arc section.

According to an embodiment of the present invention, two spokes and two missing portions are provided, and a straight line determined by the two spokes is perpendicular to a straight line determined by the two missing portions.

### BRIEF DESCRIPTION OF THE DRAWINGS

FIGs. 1-4 schematically illustrate a steering wheel according to a first embodiment of the present invention.
FIGs. 5-7 schematically illustrate a steering wheel according to a second embodiment of the present invention.
FIGs. 8-9 schematically illustrate a steering wheel according to a third embodiment of the present invention.
FIG. 10 schematically illustrates a steering wheel according to a fourth embodiment of the present invention.

### DETAILED DESCRIPTION

Specific implementations of a steering wheel according to the present invention will be described below with reference to the accompanying drawings. The following detailed description and the accompanying drawings are used to illustratively explain the principles of the present invention. The present invention is not limited to the described preferred embodiments, and the protection scope of the present invention is defined by the claims.

In addition, terms for spatial relations (such as "upper", "lower", "left", "right", etc.) are used to describe a relative positional relationship between an element and another element shown in the accompanying drawings. Therefore, when used, the terms for spatial relations may be applied to directions different from those shown in the accompanying drawings. Obviously, although all of these terms for spatial relations refer to the directions shown in the accompanying drawings for ease of explanation, a person skilled in the art will appreciate that directions different from those shown in the drawings may be used.

It is understood that the steering wheel of the present invention is applicable to vehicles to control the direction of travel thereof.

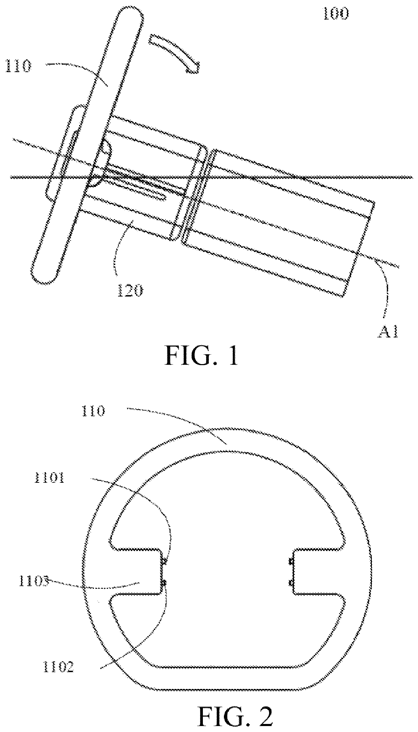

FIGs. 1-4 schematically illustrate a steering wheel according to a first embodiment of the present invention. The steering wheel according to the first embodiment of the present invention is described below with reference to FIGs. 1-4.

As shown in FIG. 1, the present invention provides a steering wheel 100, and the steering wheel 100 includes a steering wheel rim 110 and a steering wheel center portion 120. The steering wheel rim 110 is movable relative to the steering wheel center portion 120. It should be noted that the movements of the steering wheel rim 110 relative to the steering wheel center portion 120 include: rotation relative to the steering wheel center portion 120 in the direction indicated by an arrow in FIG. 1, and translation relative to the steering wheel center portion 120 in the longitudinal direction of the steering wheel center portion 120. Further, the steering wheel rim 110 is configured to be rotatable about a first axis of rotation A1, enabling a driver to control the direction of travel of a vehicle.

The steering wheel according to the first embodiment of the present invention is further described below with reference to FIG. 2.

As shown in FIG. 2, the steering wheel rim 110 includes two spokes 1103 integrally formed therewith, and the two spokes 1103 are disposed 180 degrees apart on the same straight line. The spokes 1103 are located between the steering wheel rim 110 and the steering wheel center portion 120 and used to connect the steering wheel rim 110 and the steering wheel center portion 120. Further, the steering wheel rim 110 includes a first protrusion 1101 and a second protrusion 1102, and the first protrusion 1101 and the second protrusion 1102 are movable in a first track and a second track of the steering wheel center portion 120 respectively, which will be described in detail below. More specifically, in this embodiment, the first protrusion 1101 and the second protrusion 1102 are disposed on the spokes 1103 used to connect the steering wheel rim 110 and the steering wheel center portion 120, and the two protrusions are positioned on an end face of the spokes 110 facing the steering wheel center portion 120. Those skilled in the art could understand that although in the above embodiment, the steering wheel rim is described as being provided with two spokes integrally formed therewith, and two protrusions are disposed on the spokes, this is merely an example, and the steering wheel of the present invention is not limited thereto. According to actual conditions (e.g., in consideration of personalized space requirements of users), different dispositions can be made; for example, it is possible to dispose only one spoke, and for another example, the protrusions may be disposed on positions other than the end face facing the steering wheel center portion, and may even be directly disposed on the steering wheel rim.

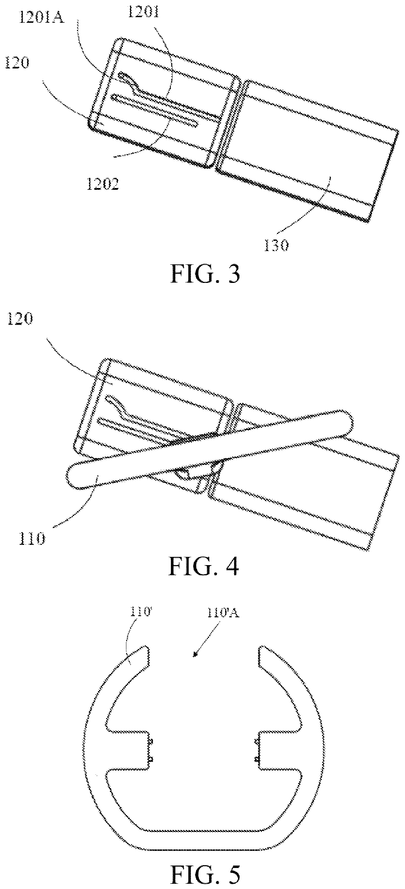

The steering wheel according to the first embodiment of the present invention is further described below with reference to FIG. 3.

As shown in FIG. 3, the steering wheel center portion 120 is provided with a first track 1201 and a second track 1202. As mentioned above, the first protrusion 1101 and the second protrusion 1102 of the steering wheel rim 110 are movable in the first track 1201 and the second track 1202 of the steering wheel center portion 120 respectively. Specifically, both the first track 1201 and the second track 1202 only extend on the steering wheel center portion 120 and do not extend to a steering column housing 130. For the first track 1201 and the second track 1202, the second track 1202 is configured to be a linear track, and an extension direction of the second track 1202 is parallel to the first axis of rotation A1. The first track 1201 is configured to have a linear track section at the right end and a change section 1201A at the left end. In this embodiment, the change section 1201A is configured to be in the shape of a circular arc, and said circular arc uses the left end point of the second track 1202 as the center of a circle. Thus, an extension direction of the first track 1201 changes at the change section 1201A, and meanwhile, the distance between the first track 1201 and the second track 1202 also changes at the change section 1201A, and specifically, decreases at the change section 1201A.

Accordingly, when the first protrusion 1101 of the steering wheel rim 110 is moving at the change section 1201A of the first track 1201 of the steering wheel center portion 120, the movement path (coinciding with the change section 1201A) of the first protrusion 1101 is a circular arc using the left end point of the second track 1202 as the center of a circle. Correspondingly, the steering wheel rim 110 rotates about a second axis of rotation, the second axis of rotation being perpendicular to the first axis of rotation A1 and passing through the left end point of the second track 1202. In this case, when the first protrusion 1101 is moving along the first track 1201, at the change section 1201A of the first track 1201, the movement of the first protrusion 1101 along the first track 1201 is transformed into the rotation of the steering wheel rim about the second axis of rotation, the second axis of rotation being perpendicular to the first axis of rotation A1.

When the steering wheel needs to be stored, the first protrusion 1101 is moved from the left end point of the change section 1201A to the right end point thereof, and in this case, the steering wheel rim 110 rotates about the second axis of rotation. Then, the first protrusion 1101 and the second protrusion 1102 move along the first track 1201 and the second track 1202 respectively such that the steering wheel rim 110 moves in the longitudinal direction of the steering wheel center portion 120, until the first protrusion 1101 and the second protrusion 1102 move along the first track 1201 and the second track 1202 to the respective right end points of the two tracks respectively, and in this case, the steering wheel rim 110 is stored, as shown in FIG. 4. As such, the steering wheel rim 110 is changed from a first state as shown in FIG. 1 into a second state as shown in FIG. 4. In the first state, a driver controls the direction of travel of a vehicle by operating the steering wheel rim 110 so that the steering wheel rim rotates about the first axis of rotation A1. In the second state, the steering wheel rim 110 is stored and is not used to control the direction of travel of the vehicle, and the driver does not need to participate in vehicle driving all the time, and may turn their attention to matters of interest or have a rest. In this case, the stored steering wheel rim allows the driver to have greater space and higher comfort.

It should be noted that in the steering wheel of the present invention, the steering wheel rim 110 is not limited to rotation in the direction indicated by the arrow in FIG. 1 relative to the steering wheel center portion 120. For example, the first track and the second track in this embodiment may be interchanged such that the steering wheel rim may be rotated relative to the steering wheel center portion in a direction reverse to the direction indicated by the arrow in FIG. 1. Further, the steering wheel of the present invention is not limited to the first track 1201 and the second track 1202 specifically described in the above embodiment, and the distance between the first track and the second track is not limited to change at the change section. For example, a section at the left end of the second track 1202 in the above embodiment may be configured to be a circular arc, and said circular arc and the change section 1201A of the first track 1201 are configured to be two concentric circular arcs. For another example, the change section in the above embodiment may be disposed at the right end of the first track.

Thus, in the steering wheel of the present invention, by disposing a change section on the steering wheel center portion, the extension direction of at least one of the first track and the second track changes at the change section, such that at the change section, the movement of the first protrusion along the first track, or the movement of the second protrusion along the second track, or the movement of the first protrusion along the first track in combination with the movement of the second protrusion along the second track is transformed into the rotation of the steering wheel rim, so as to store the steering wheel rim. Therefore, in the steering wheel of the present invention, the steering wheel rim can be rotated only by driving the two protrusions to move along the two tracks respectively. Moreover, the position of the steering wheel rim relative to the steering wheel center portion can be controlled by disposing the extension directions of the tracks; in other words, the storage degree of the steering wheel rim can be controlled to provide personalized design to users conveniently. Accordingly, the present invention provides a storable steering wheel having a simple structure and low costs.

Other embodiments of the steering wheel of the present invention are described below.

FIGs. 5-7 schematically illustrate a steering wheel according to a second embodiment of the present invention. The steering wheel according to the second embodiment of the present invention is described below with reference to FIGs. 5-7. It should be noted that the following mainly describes the differences between the second embodiment and the first embodiment, and the similarities therebetween will not be described to avoid redundancy.

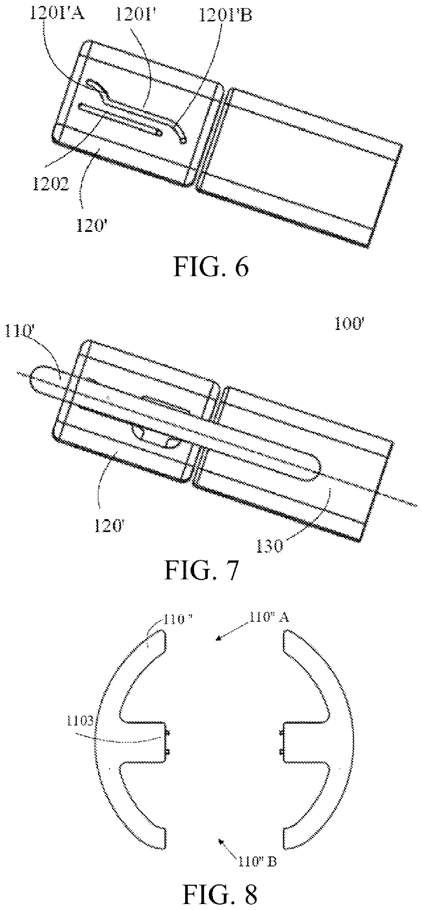

As shown in FIG. 5, a steering wheel rim 110' includes a missing portion 110'A, and the missing portion 110'A is adjacent to the steering column housing 130 when the steering wheel rim 110 rotates about the second axis of rotation (as shown in FIG. 7).

As shown in FIG. 6, a steering wheel center portion 120' is provided with a first track 1201' and a second track 1202. Specifically, for the first track 1201' and the second track 1202, the second track 1202 is configured to be a linear track, and the first track 1201' is configured to have two change sections 1201'A and 1201'B at the left end and the right end respectively, and a linear track section disposed between the two change sections. In this embodiment, each of the two change sections 1201'A and 1201'B is configured to be in the shape of a circular arc, and the two circular arcs respectively use the left end point and right end point of the second track as the center of a circle respectively. Thus, an extension direction of the first track 1201' changes at the two change sections 1201'A and 1201'B, and the distance between the first track 1201' and the second track 1202 changes at the change sections 1201'A and 1201'B. Specifically, the distance therebetween decreases at the change section 1201'A, while at the change section 1201'B, the end point of the first track 1201' is at the same straight line as the second track 1202, but is spaced apart from the right end point of the second track 1202 by a certain distance. It should be noted that the above-described change in the distance between the first track and the second track at the change sections may be understood as configuring the respective distances from two different points on a change section of a track to another track to be different, such that the two tracks extend close to each other or away from each other at the change section. Thus, in this embodiment, the distance between the first track 1201' and the second track 1202 may be understood as decreasing at the change section 1201'B, such that the two tracks at the change section extend to the right side in FIG. 1 while moving close to each other.

Accordingly, when the first protrusion 1101 of the steering wheel rim 110' is moving at the change section 1201'A of the first track 1201' of the steering wheel center portion 120', the movement path of the first protrusion 1101 is a circular arc using the left end point of the second track 1202 as the center of a circle. Correspondingly, the steering wheel rim 110' rotates about the second axis of rotation to perform the first rotation, the second axis of rotation being perpendicular to the first axis of rotation A1 and passing through the left end point of the second track 1202. When the first protrusion 1101 of the steering wheel rim 110' is moving at the change section 1201'B of the first track 1201' of the steering wheel center portion 120', the movement path of the first protrusion 1101 is a circular arc using the right end point of the second track 1202 as the center of a circle. Correspondingly, the steering wheel rim 110' rotates about another second axis of rotation to perform the second rotation, the second axis of rotation being perpendicular to the first axis of rotation A1 and passing through the right end point of the second track. In this case, when the first protrusion 1101 is moving along the first track 1201', at the change sections 1201'A and 1201'B of the first track 1201', the movement of the first protrusion 1101' along the first track 1201' is transformed into two rotations of the steering wheel rim 110' about two different second axes of rotation, both of the second axes of rotation being perpendicular to the first axis of rotation A1.

When the steering wheel needs to be stored, the first protrusion 1101 is moved from the left end point of the change section 1201'A to the right end point thereof, and in this case, the steering wheel rim 110' rotates about one second axis of rotation to perform the first rotation. Then, the first protrusion 1101 and the second protrusion 1102 move along the first track 1201' and the second track 1202 respectively, such that the steering wheel rim 110' moves in the longitudinal direction of the steering wheel center portion 120. Then, when the first protrusion 1101 is moving from the left end point to the right end point of the change section 1201'B, the steering wheel rim 110' rotates about the other second axis of rotation to perform the second rotation. Upon completion of the second rotation, the steering wheel rim 110' is stored, as shown in FIG. 7. As such, the steering wheel rim 110' is changed from the first state as shown in FIG. 1 into a second state as shown in FIG. 7. In comparison to the first embodiment, since the right end point of the first track 1201' is disposed on the same straight line as the second track 1202, the stored steering wheel rim 110' is further rotated in the direction of the arrow in FIG. 1 relative to the steering wheel center portion 120', so that the space occupied by the stored steering wheel rim is reduced.

FIGs. 8-9 schematically illustrate a steering wheel according to a third embodiment of the present invention. The steering wheel according to the third embodiment of the present invention is described below with reference to FIGs. 8-9. It should be noted that the following mainly describes the differences between the third embodiment and the second embodiment, and the similarities therebetween will not be described to avoid redundancy.

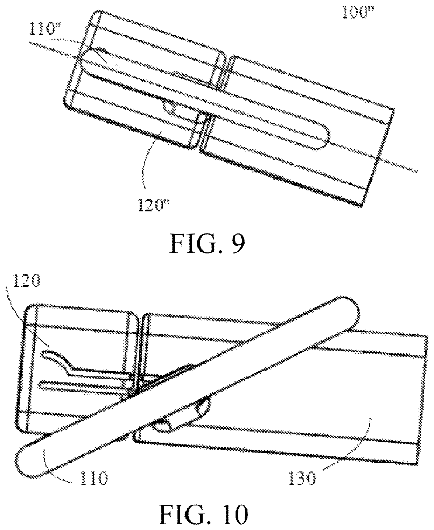

As shown in FIG. 8, a steering wheel rim 110" includes missing portions 110"A and 110"B, and the missing portions 110"A and 110"B are adjacent to the steering column housing 130 and a steering wheel center portion 120" respectively when the steering wheel rim 110" rotates about the second axis of rotation (as shown in FIG. 9). Specifically, a straight line determined by the two spokes 1103 is perpendicular to a straight line determined by the missing portions 110"A and 110"B.

It is understood that in the second embodiment, when the first protrusion 1101 is moving from the left end point to the right end point of the change section 1201'B, the steering wheel rim 110' rotates about the other second axis of rotation to perform the second rotation, such that the steering wheel rim 110' is stored. In comparison, in the third embodiment, the two protrusions may move further along the two tracks respectively, such that the left end of the steering wheel rim 110" does not exceed the left end face of the steering wheel center portion 120". As such, the steering wheel rim 110" is changed from the first state as shown in FIG. 1 into a second state as shown in FIG. 9. Compared with the second embodiment, since the left end of the steering wheel rim 110" does not exceed the left end face of the steering wheel center portion 120", the space occupied by the stored steering wheel rim is reduced.

FIG. 10 schematically illustrates a steering wheel according to a fourth embodiment of the present invention. The steering wheel according to the fourth embodiment of the present invention is described below with reference to FIG. 10. It should be noted that the following mainly describes the differences between the fourth embodiment and the first embodiment, and the similarities therebetween will not be described to avoid redundancy.

As shown in FIG. 10, different from the first embodiment, both the first track and the second track in this embodiment extend from the steering wheel center portion 120 to the steering column housing 130 in connection with an axial end (the right end in FIG. 10) of the steering wheel center portion 120. In this case, a vehicle may travel in an automated driving mode, and the direction of travel of the vehicle is controlled by a steering-by-wire system instead of the steering wheel. Further, while the steering wheel is being stored, the steering column housing 130 may also be retracted.

As an alternative embodiment of the present invention, both the axis of the steering wheel center portion 120 and the axis of the steering column housing 130 may coincide with the first axis of rotation A1.

It should be noted that although in the above embodiments, the change section is configured to have a circular arc form, the steering wheel of the present invention is not limited thereto, and those skilled in the art may design the change section in other forms according to the actual situation, e.g., a change section including a plurality of circular arcs or in other curve shapes.

As described above, although the exemplary embodiments of the present invention have been described with reference to the accompanying drawings in the description, the present invention is not limited to the aforementioned specific implementations, and the protection scope of the present invention should be defined by the claims and equivalent meanings thereof.

## Claims

1. A steering wheel (100, 100', 100"), comprising a steering wheel rim (110, 110', 110") and a steering wheel center portion (120, 120', 120"), the steering wheel rim (110, 110', 110") being movable relative to the steering wheel center portion (120, 120', 120"), and the steering wheel rim (110, 110', 110") being configured to be rotatable about a first axis of rotation (A1),
wherein
the steering wheel center portion (120, 120', 120") is provided with a first track (1201, 1201') and a second track (1202), and
the steering wheel rim (110, 110', 110") comprises a first protrusion (1101) and a second protrusion (1102) movable in the first track (1201, 1201') and the second track (1202) respectively; and
at least one of the first track (1201, 1201') and the second track (1202) comprises a change section (1201A, 1201'A, 1201'B), and an extension direction of at least one of the first track (1201, 1201') and the second track (1202) changes at the change section (1201A, 1201'A, 1201'B) such that, at the change section (1201A, 1201'A, 1201'B), movement of the first protrusion (1101) along the first track (1201, 1201'A) and/or movement of the second protrusion (1102) along the second track (1202) is transformed into rotation of the steering wheel rim (110, 110', 110") about a second axis of rotation, the second axis of rotation being perpendicular to the first axis of rotation (A1).

2. The steering wheel (100, 100', 100") according to claim 1, wherein the distance between the first track (1201, 1201') and the second track (1202) changes at the change section (1201A, 1201'A, 1201'B).

3. The steering wheel (100, 100', 100") according to claim 2, wherein one of the first track (1201, 1201') and the second track (1202) is configured to be a linear track, and the other is configured to have a linear track section and the change section (1201A, 1201'A, 1201'B).

4. The steering wheel (100, 100', 100") according to claim 3, wherein the first protrusion (1101) and the second protrusion (1102) are disposed on a spoke (1103) connected between the steering wheel rim (110, 110', 110") and the steering wheel center portion (120, 120', 120").

5. The steering wheel (100, 100', 100") according to claim 4, wherein the steering wheel further comprises a steering column housing (130) in connection with an axial end of the steering wheel center portion (120, 120', 120"), and the first track (1201, 1201') and the second track (1202) extend to the steering column housing (130).

6. The steering wheel (100, 100', 100") according to claim 5, wherein the change section (1201A, 1201'A, 1201'B) is disposed at at least one end of the first track (1201, 1201') or the second track (1202).

7. The steering wheel (100, 100', 100") according to claim 6, wherein the steering wheel rim (110, 110', 110") comprises a missing portion (110'A, 110"A, 110"B), and the missing portion (110'A, 110"A, 110"B) is adjacent to the steering wheel center portion (120, 120', 120") or the steering column housing (130) when the steering wheel rim (110, 110', 110") rotates about the second axis of rotation.

8. The steering wheel (100, 100', 100") according to claim 7, wherein both the axis of the steering wheel center portion (120, 120', 120") and the axis of the steering column housing (130) coincide with the first axis of rotation (A1).

9. The steering wheel (100, 100', 100") according to claim 8, wherein the change section (1201A, 1201'A, 1201'B) is configured to be a circular arc section.

10. The steering wheel (100, 100', 100") according to claim 9, wherein two spokes (1103) and two missing portions (110'A, 110"A, 110"B) are provided, and a straight line determined by the two spokes (1103) is perpendicular to a straight line determined by the two missing portions (110'A, 110"A, 110"B).
